# EUROPÄISCHE PATENTSCHRIFT

(11) **EP 2 093 108 B1**
(45) Veröffentlichungstag und Bekanntmachung des Hinweises auf die Patenterteilung: **29.12.2010**
(21) Anmeldenummer: 09153247.3
(22) Anmeldetag: 19.02.2009
(51) Int. Cl.: B60R 13/02, B62D 27/06, F16B 21/16

(54) **Verbindungsmittel zum Verbinden von Einbauteilen mit einer Fahrzeugzelle und Fahrzeug mit solchen Verbindungsmitteln**
Fastener for attaching mounting parts with a vehicle structure and vehicle with such fasteners
Moyen de fixation destiné à relier des pièces incorporées à une cellule de véhicule et véhicule doté de tels moyens de fixation

(30) Priorität: 19.02.2008 DE 102008009991
(43) Veröffentlichungstag der Anmeldung: 26.08.2009
(73) Patentinhaber: MKU GmbH, 27419 Sittensen (DE)
(72) Erfinder: Stabenau, Hans Günter, 27419, Sittensen (DE); Schmidt, Fritz-Gerhard, 21614, Buxtehude (DE)
(74) Vertreter: Scholz, Hartmut

(56) Entgegenhaltungen:
- WO-A-2006/028528
- DE-C1- 4 134 201
- FR-A- 2 675 553

## Beschreibung

Die vorliegende Erfindung betrifft ein Verbindungsmittel zum Verbinden von Befestigungspunkten für Einbauteile mit der Fahrzeugzelle eines Fahrzeugs zur Beförderung von Gütern und Personen, mit mindestens einem Halter und einer dem Halter zugeordneten, axial verschiebbaren Haltersicherung, die eine Verbindung mit einem Befestigungspunkt freigibt oder schließt.

Aus dem Stand der Technik ist eine Vielzahl von Möglichkeiten zur Befestigung von Einbauteilen, insbesondere von Verkleidungsteilen an den Innenseiten von Fahrzeugzellen, bekannt. So beschreibt beispielsweise die DE 101 25 216 C2 ein schnell lösbares Befestigungsmittel für Einbauteile in einem Luftfahrzeug. Bei diesem Befestigungsmittel können pilzartige Haltenasen in Hinterschneidungen von mit dem jeweiligen Fahrzeug verbundenen Befestigungsschienen eingesteckt werden.

Aus der DE 41 34 201 C1, die den Oberbegriff des Anspruchs 1 bildet, ist es bekannt, ein Verkleidungsteil durch eine Vorspannkraft, nämlich einer Feder, in ihrer Position zu halten. Dem Verkleidungsteil ist dazu fahrzeugseitig ein Befestigungselement zugeordnete, das es mit einer zugeordneten Schnappeinrichtung verbindet. Damit die Verkleidungsteile sicher in der Schnappvorrichtung gehalten werden können, ist eine Vorspannkraft notwendig. Ferner ist es erforderlich, dass alle Verkleidungsteile die beschriebene Schnappvorrichtung aufweisen. Diese Schnappvorrichtung ist sehr bruchempfindlich und aufwendig in der Herstellung. Sie kann nicht ohne erheblichen Aufwand an andere, damit nicht ausgerüsteten Verkleidungsteilen, adaptiert werden.

Aus der WO 2006/028528 A2 ist ferner eine Schnappverbindung bekannt, bei der ein Verbindungsstück mit vorgespannten Halteklauen schnell in Wirkverbindung gebracht werden kann. Eine bei Luftfahrzeugen unumgängliche doppelte Sicherung ist dabei nicht vorgesehen.

Ferner sind Befestigungsmethoden und Befestigungsmittel für Einbauteile, beispielsweise für ballistische Schutzeinbauten in Luftfahrzeugen bekannt, die fest mit der Fahrzeugzelle verschraubt werden. Diese Befestigungsmethoden und -verfahren sind jedoch mit dem Nachteil behaftet, dass ein schnelles Ein- und Ausbauen von Einbauten oder Teilen davon in der Fahrzeugzelle nicht möglich sind.

Die Ursache hierfür liegt darin begründet, dass für das Ein- und Ausbauen der Einbauteile Spezialwerkzeug verwendet werden muss, das nicht immer und überall an jedem möglichen Einsatzort zur Verfügung steht. Hierdurch kann es, insbesondere bei Fahrzeugzellen eines Luftfahrzeuges, zu einer unflexiblen Umrüstung des Innenraumes kommen, und das Luftfahrzeug kann nicht schnell genug dem jeweiligen Einsatzzweck angepasst werden.

Es ist daher Aufgabe der vorliegenden Erfindung, ein Befestigungsmittel zu schaffen, das ein schnelles Umrüsten und sicheres Halten von Einbauteilen in einer Fahrzeugzelle ermöglicht.

Diese Aufgabe wird durch die im den Patentanspruch 1 angegebenen Merkmale gelöst. Vorteilhafte Ausführungsformen der Erfindung sind Gegenstand der Unteransprüche.

Insbesondere ist es bei dem erfindungsgemäßen Verbindungsmittel vorgesehen, dass der Halter etwa halbzylindrisch ausgebildet ist, an einer Seite in einem in Einbaulage oberen Bereich mit einer tangentialen Zylinderabschnittsebene versehen ist und im in Einbaulage unteren Bereich in eine sich radial nach innen erstreckende Hinterschneidung übergeht, der Halter mittels der Hinterschneidung mit fahrzeugseitig vorhandenen Befestigungspunkten verbindbar ist, und dem Halter im Bereich der tangentialen Zylinderabschnittsebene ein als asymmetrischer Kreisabschnitt ausgebildetes Gleitstück zugeordnet ist, das in einer relativ zu dem Halter verschiebbaren Überwurfhülse die Hinterschneidung verschließend angeordnet ist.

Die Hinterschneidung stellt dabei eine Halteraufnahme dar, die mit der axial verschiebbaren Überwurfhülse durch deren axiales Verschieben geschlossen oder geöffnet werden kann. Ein als Haltepilz ausgebildeter Befestigungspunkt kann damit von dem Halter freigegeben oder eingeschlossen werden. Mit diesem erfindungsgemäßen Befestigungsmittel können Einbauteile einfach und schnell mit einer Fahrzeugzelle verbinden. Dabei dient das Verbindungsmittel als Verbindungsglied zwischen einem fahrzeugseitig vorhandenen Befestigungspunkt und einem Einbauteil, beispielsweise einem Einbauschrank, einer Krankentrage oder einer ballistischen Schutzplatte.

Durch einfaches Verschieben der Überwurfhülse kann ein Einbauteil ohne Spezialwerkzeug schnell und einfach von dem Haltepilz gelöst werden. Die Umrüstung eines Einsatzfahrzeugs, beispielsweise eines Hubschraubers, kann quasi an jedem Einsatzort vorgenommen werden.

Die erfindungsgemäße Überwurfhülse ist mit dem Gleitstück verdrehsicher verbunden. Dadurch wird sichergestellt, dass die Überwurfhülse relativ zu dem Verbindungsmittel gegen axiale Drehungen gesichert ist. Die Überwurfhülse verschließt die Aufnahmeöffnung auch unter ungünstigen Bedingungen sicher oder gibt sie wieder frei. Zugleich zentriert das Gleitstück die Überwurfhülse gegenüber dem Halter. Ein axiales Verdrehen oder ein Verkanten zwischen der Überwurfhülse und dem Halter wird vermieden. Das Gleitstück ist vorteilhaft in Form eines asymmetrischen Kreisabschnitts des Halters ausgebildet, das dem Halter im Bereich der tangentialen Zylinderabschnittsebene zugeordnet ist.

Gemäß einer weiteren besonders bevorzugten Ausführungsform des erfindungsgemäßen Verbindungsmittels ist das Gleitstück über ein Verbindungsmittel lösbar mit der Überwurfhülse verbunden. Damit kann das Gleitstück von dem Halter getrennt werden, um diese Bauteile bei Bedarf unabhängig voneinander austauschen zu können.

In einer besonders vorteilhaften Ausführungsform des erfindungsgemäßen Verbindungsmittels weist der Halter im Bereich der tangentialen Zylinderabschnittsebene eine axial verlaufende Nut auf, in die eine konvex gekrümmte Blattfeder eingelegt werden kann. Die Blattfeder weist eine definierte Federkraft auf, und ihre konvexe Krümmung weist in Einbaulage nach außen.

Das Gleitstück kann mit dem Verbindungsmittel in der axial Nut über die Federkraft der konvexen Krümmung der Blattfeder von einem Endpunkt der Nut zum anderen verschoben werden. Dadurch kann zum einen eine Verdrehung des Gleitstücks relativ zur Überwurfhülse verhindert werden, zum anderen wird die axiale Verschiebung der Überwurfhülse relativ zu dem Halter begrenzt.

In einer vorteilhaften Ausführungsform des erfindungsgemäßen Verbindungsmittels ist dem Halter ein Distanzstück zugeordnet, das im Wesentlichen den gleichen Außendurchmesser wie der Halter aufweist.

Das Distanzstück umfasst eine axiale Bohrung und eine tangentiale Bohrung, wobei die tangentiale Bohrung der Aufnahme einer zweiten Sicherung dient, die die Überwurfhülse in einer die Aufnahmeöffnung verschließenden Position hält. Die zweite Sicherung ist vorteilhaft als Fokkernadel ausgebildet.

In einer weiteren besonders vorteilhaften Ausführungsform des erfindungsgemäßen Verbindungsmittels ist die axiale Bohrung des Distanzstückes zur Aufnahme eines weiteren Befestigungspunktes ausgebildet. Dadurch kann ein weiteres Einbauteil, beispielsweise eine Krankentrage, mit dem Verbindungsmittel verbunden werden.

Die Funktionalität des ersten, direkt an der Fahrzeugzellenwand vorhandenen Befestigungspunkt wird nicht eingeschränkt. An diesem ersten Befestigungspunkt kann beispielsweise eine ballistische Schutzplatte befestigt werden, mit der die innen an dem weiteren Befestigungspunkt befestigten Einbauteile, beispielsweise eine Krankentrage, gegen äußere Gewalteinwirkung geschützt ist. Bei einer vorteilhaften Ausführung sind die Befestigungspunkte als Haltepilze ausgebildet.

Gemäß einer besonders vorteilhaften Ausführungsform der Erfindung ist das Distanzstück zur Positionierung und Ausrichtung von weiteren Befestigungspunkten für Einbauteile vorgesehen.

Bei einer vorteilhaften Ausführungsform des erfindungsgemäßen Verbindungsmittels ist ein weiterer Befestigungspunkt mit einem Schraubenschaft versehen, zur Verbindung mit dem Halter ein in eine Gewindebohrung eingeschraubt werden kann. Zur Sicherung des Schraubenschaftes ist in der Gewindebohrung ein eingebrachter Gewindeeinsatz vorgesehen, Ein solcher Gewindeeinsatz wird beim Festziehen des Schraubenschafts verformt und der Schraubenschaft des weiteren Befestigungspunktes ist gesichert mit dem Halter verbunden.

Das mit einem oben beschriebenen Verbindungsmittel ausgestattete Fahrzeug ist erfindungsgemäß ein Luftfahrzeug, insbesondere ein Hubschrauber.

Die Erfindung wird im Folgenden anhand einer beispielhaften Ausführungsform unter Bezugnahme auf die beigefügten Zeichnungen näher erläutert; es zeigt:
- **Figur 1**: das erfindungsgemäße Verbindungs- mittel nach Figur 1, zusammenge- baut, mit einem daran befestigten Einbaubauteil und einem nachgeord- neten zweiten Befestigungspunkt zur Befestigung weiterer Einbauteilen;
- **Figur 1a**: die Detaildarstellung eines ver- senkt in einer Halterschale einge- bauten, als Haltepilz ausgebildeter Befestigungspunkt zur Befestigung von Einbauteilen, teilweise ge- schnitten;
- **Figur 2**: die Einzelteildarstellung eines er- findungsgemäßen Verbindungsmittels, teilweise geschnitten, zur Befesti- gung an einem fahrzeugseitig vor- handenen Befestigungspunkt;
- **Figur 3**: die Draufsicht auf ein erfindungs- gemäßes Verbindungsmittel nach Fi- gur 1, entlang der Linie A-A in Fi- gur 2 geschnitten, mit einer Auf- nahmeöffnung zur befestigenden Auf- nahme eines fahrzeugseitig vorhan- denen Befestigungspunktes.

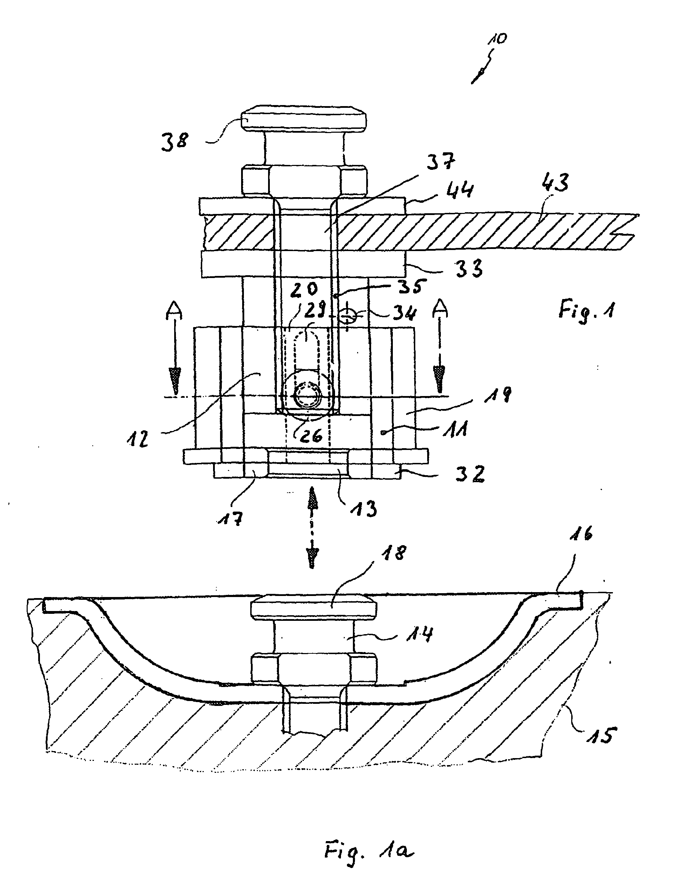

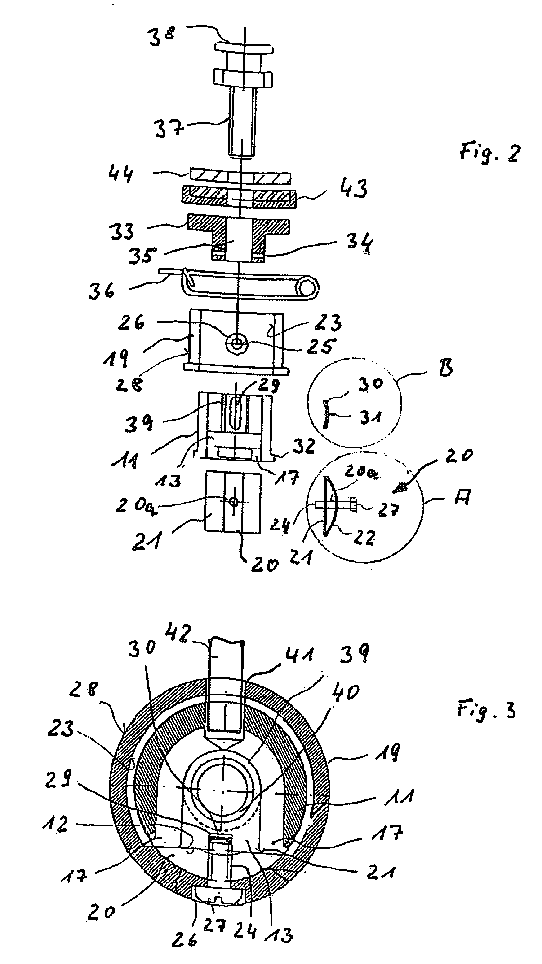

Das in den Figuren 1 und 2 dargestellte Verbindungsmittel 10 besteht im Wesentlichen aus einem etwa halbzylindrisch ausgebildeten Halter 11, der an einer Seite mit einer tangentialen Zylinderabschnittsebene 12 versehen ist. Die Zylinderabschnittsebene 12 ist im in Einbaulage oberen Bereich des Halters 11 vorgesehen. Im unteren Bereich geht sie in eine sich radial nach innen erstreckende Aufnahmeöffnung 13 über. Die Aufnahmeöffnung 13 dient zur Aufnahme eines fahrzeugseitig vorhandenen Befestigungspunktes 14, wie er in der Figur 1a dargestellt ist.

Derartige Befestigungspunkte 14 sind üblicherweise als Haltepilze ausgebildet und im Bereich von relativ stabilen Teilen, beispielsweise Streben oder Träger, fest mit einer nicht näher dargestellten Fahrzeugzelle 15 verbunden. Vorzugsweise sind sie in Halterschalen 16 versenkt eingebaut und dienen der Befestigung von austauschbaren Einbauteilen, beispielsweise Sitzen, Krankentragen, Schränken, ballistischen Schutzplatten oder dgl..

Die Aufnahmeöffnung 13 ist so ausgeformt, dass ein als Haltepilz ausgebildeter Befestigungspunkt 14 eingebracht werden kann. Die Aufnahmeöffnung 13 ist dazu mit einer radial innen liegenden, nach radial außen bis an die Zylinderabschnittsebene 12 verlaufenden Hinterschneidung 17 versehen. Zum Einbau greift die Hinterschneidung 17 der Aufnahmeöffnung 13 unter den Haltepilzkopf 18 des eingebracht Befestigungspunktes 14, der damit in seiner Einbauposition gehalten wird.

Um den Befestigungspunkt 14 in seiner Einbauposition zu halten, ist dem Halter 11 eine Überwurfhülse 19 zugeordnet, die passgenau über den Halter 11 geschoben werden kann. Im Bereich der tangentialen Zylinderabschnittsebene 12 kann ein Gleitstück 20 in die Überwurfhülse 19 eingeschoben werden.

Wie das Detail A zu der Figur 2 zeigt, ist das Gleitstück 20 in Draufsicht kreisabschnittförmig ausgebildet und weist eine ebene Seitenfläche 21 und eine konvexe Seitenfläche 22 auf.

Mit seiner ebenen Seitenfläche 21 kann das Gleitstück 20 auf der tangentialen Zylinderabschnittsebene 12 des Halters 11 axial verschoben werden. Durch dieses Verschieben wird die Aufnahmeöffnung 13 geschlossen oder geöffnet, um den eingebrachte Haltepilzkopf 18 des Befestigungspunktes 14 in seiner Einbaulage zu halten oder frei zugegeben.

Das Gleitstück 20 ist als eine asymmetrische Einlage ausgebildet, die mit dem Halter 11 in Wirkverbindung gebracht werden kann. Es stützt sich in Einbaulage mit seiner konvexen Seitenfläche 21 radial außen an der Innenoberfläche 23 der Überwurfhülse 19 ab.

Um das Gleitstück 20 in seiner Einbaulage zu halten, kann es mit einem Verbindungsmittel, beispielsweise einer Sicherungsschraube 24, lösbar mit der Überwurfhülse 19 verbunden werden. Das Gleitstück 20 ist dazu mit einer durchgehenden Gewindebohrung 20a versehen.

Die Überwurfhülse 19 weist eine Bohrung 25 mit einer Einsenkung 26 auf. Der Schraubenkopf 27 der Sicherungsschraube 24 kann dadurch im eingeschraubten Zustand bündig mit der Außenoberfläche 28 der Überwurfhülse 19 abschließt.

Zur Verbindung mit der Überwurfhülse 19 wird die Sicherungsschraube 24 durch die Bohrung 25 geführt und durch die Gewindebohrung 20a des Gleitstücks 20 geschraubt. Dabei wird die konvexe Seitenfläche 21 mit der Innenoberfläche 23 der Überwurfhülse 19 verbunden.

In der Zylinderabschnittsebene 12 des Halters 11 ist eine axial verlaufende ovale Nut 29 vorgesehen. Bei der Verbindung der Überwurfhülse 19 mit dem Gleitstück 20 wird die Sicherungsschraube 24 durch die Gewindebohrung 20a hindurch bis in die ovale Nut 29 geführt.

In die ovale Nut 29 kann ein federndes Haltemittel in Form einer Blattfeder 30 eingelegt werden. Im eingeschraubten Zustand wirkt das freie Ende der durchgeschraubten Sicherungsschraube 24 gegen die in die ovale Nut 29 eingelegte Blattfeder 30.

Wie das Detail B zu der Figur 2 zeigt, ist die Blattfeder 30 bei der vorliegenden Ausführungsform als konvex gebogenes federndes Metallbändchen ausgebildet, das beispielsweise aus Federstahl besteht. Der konvexe Hochpunkt 31 der Blattfeder 30 weist in Einbaulage radial nach außen.

Durch Eindrehen der Sicherungsschraube 24 durch die Bohrung 25 und die Gewindebohrung 20a bis in die Nut 29 werden der Halter 11, das Gleitstück 20 und die Überwurfhülse 19 miteinander verbunden. Die axiale Länge der Nut 29 entspricht etwa der Höhe der Aufnahmeöffnung 13. Bei eingeschraubter Sicherungsschraube 24 kann die Überwurfhülse 19 relativ zu dem Halter 11 soweit axial verschoben werden, dass Aufnahmeöffnung 13 freigegeben oder geschlossen ist. Die axiale Verschiebung der Überwurfhülse 19 wird dabei durch die Länge der Nut 29 bestimmt.

Bei Offenstellung der Überwurfhülse 19, wenn also die Überwurfhülse 19 in Einbaulage nach oben verschoben ist, kann der Haltepilzkopf 18 des Befestigungspunktes 14 in die Aufnahmeöffnung 13 eingeschoben werden. Danach wird die Überwurfhülse 19 in Einbaulage nach unten in Geschlossenstellung verschoben. Die Aufnahmeöffnung 13 wird damit wieder geschlossen und der Haltepilzkopf 18 in seiner Lage sicher gehalten.

Beim Verschieben der Überwurfhülse 19 relativ zu dem Halter 11 gleitet die Sicherungsschraube 24 über den konvexen Hochpunkt 31 der Blattfeder 30. Die hierfür aufzubringende Kraft wird durch die Federrate der Blattfeder 30 bestimmt. Sie ist so ausgelegt, dass ein ungewolltes, selbstständiges Öffnen oder Schließen der Aufnahmeöffnung 13, beispielsweise durch auf das Verbindungsmittel 10 wirkende Beschleunigungs- oder Gravitationskräfte wirkungsvoll vermieden wird. Die Blattfeder 30 wirkt dabei quasi als eine Schnappverbindung, die zwischen Offenstellung und Geschlossenstellung der Aufnahmeöffnung 13 überwunden werden muss.

Der Halter 11 besteht aus einem hochfesten, elastischen, korrosionsbeständigen Stahl, beispielsweise dem Edelstahl 1.4301. Die Überwurfhülse 19 ist aus Gründen der Gewichtsreduzierung aus einem Leichtmetall oder einer Leichtmetalllegierung gefertigt. Das Gleitstück 20 besteht üblicherweise aus dem gleichen Material wie die Überwurfhülse 19, denkbar sind aber auch Kunststoffe oder Verbundwerkstoffe mit vergleichbaren Festigkeitseigenschaften.

Der Halter 11 weist im Bereich der Aufnahmeöffnung 13 einen radial außen verlaufenden Kragen 32 auf. Der Kragen 32 ist einstückig angeformt und dient als axialer Anschlag für die Überwurfhülse 19 nachdem sie über dem Halter 11 in Einbauposition gebracht worden ist. Zugleich begrenzt der Kragen 32 die axiale Verschiebbarkeit zwischen dem Halter 11 und der Überwurfhülse 19. Der Kragen 32 des Halters 11 ist hufeisenförmig ausgebildet und wird durch die Aufnahmeöffnung 13 unterbrochen.

Um ein ungewolltes Verschieben der Überwurfhülse 19 und damit ein Öffnen der Aufnahmeöffnung 13 zu vermeiden, ist der Überwurfhülse 19 auf ihrer der Aufnahmeöffnung 13 in axialer Richtung entgegengesetzten Seite ein Distanzstück 33 vorgesehen. Das Distanzstück 33 ist im Querschnitt T-förmig ausgebildet und weist eine tangentiale Bohrung 34 und eine axiale Bohrung 35 auf.

Durch die tangentiale Bohrung 34 kann als eine zweite Sicherung, beispielsweise eine Sicherungsnadel 36 gesteckt werden. Mit der Sicherungsnadel 36 ist das Distanzstück 33 gegen axiale Verschiebung gesichert und hält die Überwurfhülse 19 zusätzlich zu der Sicherungsschraube 24 in ihrer Einbaulage. Eine ungewollte axiale Verschiebung des Halters 11 wird so doppelt gesichert verhindert. Die Aufnahmeöffnung 13 bleibt dadurch in gesicherter Geschlossenstellung und der Halter 11 mit dem Haltepilzkopf 18 verbunden.

Durch die axiale Bohrung 35 kann der Schraubenschaft 37 eines weiteren Befestigungspunkt 38 geführt werden. Der weitere Befestigungspunkt 38 ist ebenfalls als Haltepilz ausgebildet.

Der weitere Befestigungspunkt 38 kann mit seinem Schraubenschaft 37 in eine zentrische, axial verlaufende Gewindebohrung 39 des Halters 11 eingeschraubt werden. Zur Sicherung der Schraubverbindung des Schraubenschafts 37 mit dem Halter 11 ist in die Gewindebohrung 39 ein Gewindeeinsatz mit Schraubenstop, ein sog. Helicoil 40 eingedreht.

Um den Schraubenschaft 37 festziehen zu können, ist, wie die Figur 3 in Draufsicht zeigt, durch die Überwurfhülse 19 eine bis in den Halter 11 reichende radiale Haltebohrung 41 eingebracht. Die radiale Haltebohrung 41 ist vorzugsweise diagonal gegenüber der Bohrung 25 für die Sicherungsschraube 24 vorgesehen.

In die radiale Haltebohrung 41 kann ein Haltestift 42 lose eingesteckt werden. Mit dem Haltestift 42 können die Überwurfhülse 19 und der Halter 11 beim Festziehen des Schraubenschafts 36 des weiteren Befestigungspunktes 38 in dem Helicoil 40 gegen Verdrehung gehalten werden.

Beim Festziehen des Schraubenschafts 37 in der axial verlaufenden Gewindebohrung wird das Helicoil 40 verformt. Der Schraubenschaft 37 des weiteren Befestigungspunktes 38 ist dadurch gegen Vibration gesichert mit dem Halter 11 verbunden. Zwischen den Distanzstücken 33 und den weiteren Befestigungspunkten 38 können Einbauteile 43, beispielsweise Krankentragehalterungen, Einbauschränke, Sitze oder ballistische Schutzplatten, mit der Fahrzeugzelle 15, beispielsweise eines Luftfahrzeugs, hier eines Hubschraubers, verbunden werden.

Zwischen einem weiteren Befestigungspunkt 38 und einem Einbauteil 43 kann als Abstandshalter eine Unterlegscheibe 44 vorgesehen sein. Der weitere Befestigungspunkt 38 stellt quasi eine Verlängerung des ursprünglichen, direkt mit der Fahrzeugzelle 15 verbundenen ersten Befestigungspunktes 14 dar, an dem weitere - nicht dargestellte - Einbauteile befestigt werden können.

Bei einer anderen nicht dargestellten Ausführungsform kann es vorgesehen sein, Einbauteile mittels Schnellverschlüsse mit dem Halter 11 zu verbinden. Der Halter 11 ist hierzu mit der axialen Bohrung 35 ausgestattet, die mit einer Aufnahme für ein entsprechendes in Schnellverschlusssystem verbunden werden kann. Als Schnellverschlusssystem sind solche Systeme zu bevorzugen, die ein Befestigen des Einbauteiles ohne zusätzliches Werkzeug ermöglichen und sicherstellen. Denkbar ist beispielsweise eine Verbindung, die durch eine Steck-Drehbewegung oder Schnappverbindung erfolgt.

### Bezugszeichen

- 10: Verbindungsmittel
- 11: Halter
- 12: Zylinderabschnittsebene
- 13: Aufnahmeöffnung
- 14: Befestigungspunkt/Haltepilz
- 15: Fahrzeugzelle
- 16: Halteschale
- 17: Hinterschneidung
- 18: Haltepilzkopf
- 19: Überwurfhülse
- 20: Gleitstück
- 20a: Gewindebohrung
- 21: ebene Seitenfläche
- 22: konvexe Seitenfläche
- 23: Innenoberfläche
- 24: Sicherungsschraube
- 25: Bohrung
- 26: Einsenkung
- 27: Schraubenkopf
- 28: Außenoberfläche
- 29: Nut
- 30: Blattfeder
- 31: Hochpunkt
- 32: Kragen
- 33: Distanzstück
- 34: tangentiale Bohrung
- 35: axiale Bohrung
- 36: Fokkernadel
- 37: Schraubenschaft
- 38: weiterer Befestigungspunkt
- 39: Gewindebohrung
- 40: Helicoil
- 41: radiale Haltebohrung
- 42: Haltestift
- 43: Einbauteil
- 44: Unterlegscheibe

## Patentansprüche

1. Verbindungsmittel (10) zum Verbinden von Einbauteilen (43) mit der Fahrzeugzelle (15) eines Fahrzeugs zur Beförderung von Gütern und Personen, mit mindestens einem Halter (11) und einer dem Halter (11) zugeordneten, axial verschiebbaren Haltersicherung, die eine Verbindung mit einem Befestigungspunkt (14) freigibt oder schließt, **dadurch gekennzeichnent, dass** der Halter (11) etwa halbzylindrisch ausgebildet ist, an einer Seite in einem in Einbaulage oberen Bereich mit einer tangentialen Zylinderabschnittsebene (12) versehen ist und im in Einbaulage unteren Bereich in eine sich radial nach innen erstreckende Aufnahmeöffnung (13) einer Hinterschneidung (17) übergeht, der Halter (11) mittels der Hinterschneidung (17) mit fahrzeugseitig vorhandenen Befestigungspunkten (14) verbindbar ist, und dem Halter (11) im Bereich der tangentialen Zylinderabschnittsebene (12) ein als asymmetrischer Kreisabschnitt ausgebildetes Gleitstück (20) zugeordnet ist, das in einer relativ zu dem Halter (11) verschiebbaren Überwurfhülse (19) die Hinterschneidung (17) verschließend angeordnet ist.

2. Verbindungsmittel nach Anspruch 1, **dadurch gekennzeichnet, dass** das Gleitstück (20) über ein Verbindungsmittel (24) lösbar mit der Überwurfhülse (19) und dem Halter (11) verbindbar ist.

3. Verbindungsmittel nach einem der vorangehenden Ansprüche, **dadurch gekennzeichnet, dass** der Halter (11) im Bereich der tangentialen Zylinderabschnittsebene (12) eine axial verlaufende Nut (29) aufweist, in die eine eine definierte Federkraft aufweisende Blattfeder (30) einlegbar ist.

4. Verbindungsmittel nach Anspruch 3, **dadurch gekennzeichnet, dass** das freie Ende des Verbindungsmittels (24) in der Nut (29) in Wirkkontakt mit der Blattfeder (30) bringbar ist.

5. Verbindungsmittel nach einem der vorangehenden Ansprüche, **dadurch gekennzeichnet, dass** das Gleitstück (20) mit dem Verbindungsmittel (24) in der Nut (29) axial geführt ist.

6. Verbindungsmittel nach einem der vorangehenden Ansprüche, **dadurch gekennzeichnet, dass** die Blattfeder (30) konvex ausgebildet und mit ihrem konvexen Hochpunkt (31) radial nach außen weisend in die axiale Nut (29) eingelegt ist.

7. Verbindungsmittel nach einem der vorangehenden Ansprüche, **dadurch gekennzeichnet, dass** die axiale Länge der Nut (29) etwa der Höhe der Aufnahmeöffnung (13) entspricht und die Überwurfhülse (19) bei in die Nut (29) eingebrachtem Verbindungsmittel (24) soweit relativ zu dem Halter (11) axial verschiebbar ist, dass die Aufnahmeöffnung (13) des Halters (11) freigegeben oder geschlossen ist.

8. Verbindungsmittel nach einem der vorangehenden Ansprüche, **dadurch gekennzeichnet, dass** das Verbindungsmittel (24) bei der relativen Verschiebung der Überwurfhülse (19) über den Hochpunkt (31) der konvexen Blattfeder (30) gleitet und an den Endpunkten der Nut (29) quasi in Schnappverbindung einrastet.

9. Verbindungsmittel nach einem der vorangehenden Ansprüche, **dadurch gekennzeichnet, dass** der Halter (11) mit einer axiale Gewindebohrung (39) versehen ist, in die der Schraubenschaft (37) eines weiteren Befestigungspunktes (38) einbringbar ist.

10. Verbindungsmittel nach Anspruch 9 **dadurch gekennzeichnet, dass** zur Sicherung der Verbindung des Schraubenschaftes (37) mit dem Halter (11) ein in die Gewindebohrung (39) eingebrachter Gewindeeinsatz (40) vorgesehen ist.

11. Verbindungsmittel nach einem der vorangehenden Ansprüche, **dadurch gekennzeichnet, dass** der Halter (11) mit fahrzeugseitigen Befestigungspunkten (14) zur Aufnahme von Einbauteilen (43) verbindbar ist.

12. Verbindungsmittel nach einem der vorangehenden Ansprüche, **dadurch gekennzeichnet, dass** der Halter (11) mit Einbauteilen (43), beispielsweise Krankentragehalterungen, Einbauschränken und/oder ballistischen Schutzplatten, in einer Fahrzeugzelle (16), beispielsweise eines Luftfahrzeugs, insbesondere eines Hubschraubers, verbindbar ist.

## Claims

1. Connection assembly (10) for connecting build-in parts (43) to the structure or frame (15) of a vehicle for transporting goods and persons, said assembly comprising at least one holder (11) and one axially displaceable holder securing assembly associated with holder (11) to expose, or cover and seal, a connection at a connecting point, **characterized in that** holder (11) is approximately semi-cylindrical in shape, has on one side in a portion thereof which is at the top in the mounted condition a tangential cylinder section plane (12), and transitions in a portion thereof which in the mounted condition is at the bottom to form a radially inwardly extending receiving opening (13) of an undercut (17), **in that** holder (11) is adapted to be connected by means of undercut (17) with securing points (14) provided on the vehicle, and **in that** holder (11) has associated therewith in the region of said tangential cylinder section plane (12) a slide member (20) in the form of an asymmetrical segment of a circle and disposed in a outer covering sleeve (19) displaceable relative to holder (11) to cover and seal undercut (17).

2. Connection assembly as in claim 1, **characterized in that** slide member (20) is adapted to be releasably connected with outer covering sleeve (19) and holder (11) by connector device (24).

3. Connection assembly as in any one of the preceding claims, **characterized in that** holder (11) has therein in the region of tangential cylinder section plane (12) an axially extending groove (29) adapted to receive a leaf spring (30) providing a defined spring force.

4. Connection assembly as in claim 3, **characterized in that** the free end of connector device (24) can be placed in groove (29) into operative interaction with leaf spring (30).

5. Connection assembly as in claim 3, **characterized in that** slide member (20) is axially guided in groove (29) by connector device (24).

6. Connection assembly as in claim 3, **characterized in that** leaf spring (30) is formed to be convex and is placed into axial groove (29) with its convex apex pointing radially outwardly.

7. Connection assembly as in claim 3, **characterized in that** the axial length of groove (29) corresponds approximately to the height of receiving opening (13) and **in that**, with connector device (24) placed in groove (29), outer covering sleeve (19) is axially displaceable relative to holder (11) a distance sufficient to expose or cover receiving opening (13) of holder (11).

8. Connection assembly as in claim 3, **characterized in that**, as outer covering sleeve (19) is being displaced, connector device (24) slides over apex (31) of convex leaf spring (30) and "snaps into place" at the end points of groove (29).

9. Connection assembly as in any one of the preceding claims, **characterized in that** holder (11) has therein a threaded axial bore (39) adapted to receive the threaded shank (37) of another connecting point (38).

10. Connection assembly as in claim 9, **characterized in that** a threaded insert (40) is provided in threaded bore (39) to secure the connection of threaded shank (37) to holder (11).

11. Connection assembly as in any one of the preceding claims, **characterized in that** holder (11) is adapted to be connected to securing points (14) on the vehicle for the reception of build-inparts (43).

12. Connection assembly as in any one of the preceding claims, **characterized in that** holder (11) is adapted to be connected with build-in parts (43) such as stretcher holders, build-in cupboards and/or ballistic protection panels in a vehicle structure (16) such as an airframe, especially of a helicopter.

## Revendications

1. Moyen de liaison (10) pour relier des éléments incorporés (43) à la cellule (15) d'un véhicule de transport de marchandises et de personnes, avec au moins un support (11) et un blocage de support associé au support (11) et déplaçable axialement, lequel débloque ou ferme une liaison avec un point de fixation (14), **caractérisé en ce que** le support (11) est de réalisation approximativement semi-cylindrique, est pourvu d'un plan tangentiel en segment de cylindre (12) d'un côté dans une zone qui est supérieure en position de montage et se prolonge, dans la zone qui est inférieure en position de montage, par un orifice de logement (13) d'un dégagement (17), lequel orifice s'étend radialement vers l'intérieur, le support (11) pouvant être relié à des points de fixation (14) présents sur le véhicule au moyen du dégagement (17) et une pièce coulissante (20) qui se présente sous la forme d'un segment de cercle asymétrique étant associée au support (11) dans la zone du plan tangentiel en segment de cylindre (12), laquelle pièce est située, de manière à fermer le dégagement (17), dans une douille d'accouplement (19) déplaçable relativement au support (11).

2. Moyen de liaison selon la revendication 1, **caractérisé en ce que** la pièce coulissante (20) peut être reliée de manière amovible à la douille d'accouplement (19) et au support (11) par l'intermédiaire d'un moyen de liaison (24).

3. Moyen de liaison selon l'une des revendications précédentes, **caractérisé en ce que** le support (11), dans la zone du plan tangentiel en segment de cylindre (12), présente une rainure axiale (29) dans laquelle peut être posé un ressort à lame (30) doté d'une force élastique définie.

4. Moyen de liaison selon la revendication 3, **caractérisé en ce que** l'extrémité libre du moyen de liaison (24) peut, dans la rainure (29), être mise en contact actif avec le ressort à lame (30).

5. Moyen de liaison selon la revendication 3, **caractérisé en ce que** la pièce coulissante (20) est guidée axialement dans la rainure (29) avec le moyen de liaison (24).

6. Moyen de liaison selon la revendication 3, **caractérisé en ce que** le ressort à lame (30) est de réalisation convexe et est inséré dans la rainure axiale (29) avec le sommet (31) de sa convexité tourné radialement vers l'extérieur.

7. Moyen de liaison selon la revendication 3, **caractérisé en ce que** la longueur axiale de la rainure (29) correspond approximativement à la hauteur de l'orifice de logement (13) et la douille d'accouplement (19), lorsque le moyen de liaison (24) est inséré dans la rainure (29), peut être déplacée axialement relativement au support (11) jusqu'au déblocage ou à la fermeture de l'orifice de logement (13) du support (11).

8. Moyen de liaison selon la revendication 3, **caractérisé en ce que** le moyen de liaison (24), lors du déplacement relatif de la douille d'accouplement (19), glisse au-dessus du sommet (31) du ressort à lame convexe (30) et s'enclenche au niveau des extrémités de la rainure (29) pour établir quasiment une liaison par enclenchement.

9. Moyen de liaison selon l'une des revendications précédentes, **caractérisé en ce que** le support (11) est pourvu d'un perçage fileté axial (39) dans lequel la tige filetée (37) d'un autre point de fixation (38) peut être insérée.

10. Moyen de liaison selon la revendication 9, **caractérisé en ce qu'**un insert fileté (40) insérer dans le perçage fileté (39) est prévu pour bloquer la liaison entre la tige filetée (37) et le support (11).

11. Moyen de liaison selon l'une des revendications précédentes, **caractérisé en ce que** le support (11) peut être relié à des points de fixation (14) situés sur le véhicule pour recevoir des éléments incorporés (43).

12. Moyen de liaison selon l'une des revendications précédentes, **caractérisé en ce que** le support (11) peut être relié à des éléments incorporés (43), par exemple des éléments de retenue de civières, des armoires encastrées et/ou des plaques de protection balistique, dans une cellule de véhicule (16), par exemple un aéronef, et plus particulièrement un hélicoptère.
